# FASCICULE DE BREVET EUROPEEN

(11) **EP 4 005 865 B1**
(45) Date de publication et mention de la délivrance du brevet: **01.05.2024**
(21) Numéro de dépôt: 21208858.7
(22) Date de dépôt: 17.11.2021
(51) Int. Cl.: B60N 2/06, B60N 2/02

(54) **DISPOSITIF DE RÉGLAGE DE POSITION POUR SIÈGE DE VÉHICULE**
VORRICHTUNG ZUR POSITIONSREGULIERUNG FÜR FAHRZEUGSITZ
POSITION ADJUSTMENT DEVICE FOR VEHICLE SEAT

(30) Priorité: 27.11.2020 FR 2012268
(43) Date de publication de la demande: 01.06.2022
(73) Titulaire: FAURECIA Sièges d'Automobile, 92000 Nanterre (FR)
(72) Inventeur: PLANCON, Bertrand, 61100 FLERS (FR); FERRE, Ludovic, 61100 FLERS (FR); ROUDOT, Michel, 28480 BEAUMONT-LES-AUTELS (FR)
(74) Mandataire: Plasseraud IP

(56) Documents cités:
- EP-A2- 1 010 570
- WO-A1-2014/033393
- US-A1- 2012 145 868

## Description

### Domaine technique

L'invention présente se rapporte au domaine des dispositifs d'ajustement de la position du siège d'un véhicule. De tels dispositifs permettent notamment d'adapter la position du siège afin d'ajuster la position de conduite du conducteur suivant la taille et les préférences de celui-ci.

### Technique antérieure

Il est connu de proposer un siège de véhicule dont l'ajustement de position est commandé électriquement. Une commande électrique actionnée par l'utilisateur commande un ou plusieurs moteurs électriques qui actionnent des mécanismes d'ajustement de la position de divers éléments du siège. Le siège peut ainsi être avancé ou reculé, l'inclinaison du dossier ainsi que la hauteur de l'assise peuvent également être modifiées selon les préférences de l'occupant. D'autres fonctions sont aussi possibles comme le réglage du nez d'assise, ou de l'appuie-tête.

Dans le cas d'un mécanisme électrique d'ajustement de la position longitudinale du siège, le moteur électrique est disposé sous l'assise du siège, sur une traverse reliant les glissières mobiles sur lesquelles l'assise du siège est fixée. Le moteur électrique entraine en rotation, via un flexible de transmission, l'écrou d'un système de type vis-écrou. Le mouvement de rotation du moteur électrique est ainsi transformé en un mouvement de translation des glissières mobiles, et ainsi de l'ensemble du siège.

Le ou les moteurs électriques des différentes fonctions du siège peuvent être commandés par une unité électronique de contrôle. Cette unité électronique de contrôle reçoit les commandes de l'utilisateur pour le déplacement du siège, et alimente électriquement le ou les moteurs électriques afin d'assurer le déplacement voulu.

Cette unité électronique de contrôle est fixée sous l'assise du siège, et est raccordée aux moteurs et actionneurs électriques par un faisceau souple de connexion électrique. L'unité électronique de contrôle occupe donc une partie de l'espace libre présent entre le dessous de l'assise du siège et le plancher du véhicule.

Les documents US 20212/145868 A1, WO 2014/033393 A1 et EP 1 010 570 A2 montrent des exemples pour loger une unité électronique de contrôle du siège.

### Résumé

Le but de l'invention présente est de diminuer l'espace nécessaire pour loger l'unité électronique de contrôle du siège. L'assise du siège peut ainsi être plus proche du plancher du véhicule, ce qui permet notamment au concepteur du véhicule de réduire la hauteur du véhicule, et donc sa surface frontale. La résistance aérodynamique à l'avancement est ainsi réduite, ce qui permet de réduire la consommation énergétique du véhicule.

A cette fin, il est proposé un dispositif de réglage de position pour siège de véhicule, comportant :
- deux glissières s'étendant selon un axe longitudinal, chaque glissière comportant un profilé fixe et un profilé mobile, chaque glissière comportant un mécanisme de réglage de la position du profilé mobile par rapport au profilé fixe le long de l'axe longitudinal, le mécanisme de réglage étant configuré pour coopérer avec un moteur électrique,
- une traverse solidaire des profilés mobiles respectifs des deux glissières,
- un moteur électrique configuré pour entrainer chacun des mécanismes de réglage par l'intermédiaire d'une liaison de transmission, le moteur électrique étant solidaire de la traverse,
- une unité électronique de contrôle configurée pour commander le moteur électrique, dans lequel l'unité électronique de contrôle est solidaire de la traverse, caractérisé en ce que la traverse comprend un logement de réception du moteur électrique, le logement de réception comportant une paroi de fond et deux parois latérales, en ce que une paroi latérale est disposée entre le moteur électrique et l'unité électronique de contrôle, dans lequel l'unité électronique de contrôle est disposée contre une surface extérieure d'une paroi latérale du logement de réception du moteur électrique, et en ce que la traverse comporte des éléments de guidage configurés pour guider l'unité électronique de contrôle lors de la connexion de l'unité électronique de contrôle au moteur électrique.

Autrement dit, le moteur électrique et l'unité électronique de contrôle du moteur électrique sont solidaires d'une même traverse. La traverse supportant le moteur électrique supporte aussi l'unité électronique de contrôle. L'emplacement utilisé dans les solutions selon l'art antérieur pour placer l'unité électronique de contrôle sous le siège peut ainsi être libéré. Il est ainsi possible de rapprocher l'assise du siège du plancher du véhicule. Le volume libéré peut aussi servir à disposer un espace de rangement supplémentaire, et les opérations d'assemblage de l'unité de contrôle sur le véhicule sont facilitées.

Les caractéristiques listées dans les paragraphes suivant peuvent être, optionnellement, mises en oeuvre, indépendamment les unes des autres ou selon toutes les combinaisons techniquement possibles :
Le mécanisme de réglage comprend un système vis/écrou, et le moteur électrique est configuré pour entrainer en rotation un élément parmi la vis et l'écrou.

L'écrou du système vis/écrou du mécanisme de réglage est un écrou rotatif.

L'unité électronique de contrôle comporte une carte de circuit imprimé configurée pour alimenter électriquement le moteur électrique, et la carte de circuit imprimée s'étend dans un plan perpendiculaire à la direction longitudinale.

L'encombrement selon la direction longitudinale est ainsi réduit.

L'unité électronique de contrôle comporte une carte de circuit imprimé configurée pour alimenter électriquement le moteur électrique, et la carte de circuit imprimée s'étend dans un plan parallèle à la direction longitudinale et à la direction transversale.

L'encombrement selon la direction verticale est ainsi réduit.

Le moteur électrique comporte un rotor et une cible magnétique solidaire du rotor, et la carte de circuit imprimé de l'unité électronique de contrôle comporte un capteur de position configuré pour déterminer la position angulaire du rotor.

En variante, la liaison de transmission comporte une cible magnétique, et la carte de circuit imprimé de l'unité électronique de contrôle comporte un capteur de position configuré pour déterminer la position angulaire de la liaison de transmission.

Le capteur de position est un capteur à effet Hall et la cible magnétique solidaire du rotor est un aimant permanent. Un capteur de position inductif, ou capacitif, peut également être utilisé.

L'unité électronique de contrôle est fixée à la traverse par des éléments de liaison à emboitage élastique.

Les opérations d'assemblage de l'unité de contrôle sur le véhicule sont ainsi facilitées.

La traverse forme un logement de réception de la carte de circuit imprimé de l'unité électronique de contrôle.

La traverse intègre ainsi les principaux éléments du dispositif de réglage de position : le moteur électrique, la liaison de transmission, ainsi que l'électronique de commande. L'encombrement et le poids sont diminués par rapport aux solutions de l'état de l'art. De plus, l'intégration de l'unité électronique de commande à côté du moteur de glissière permet de réduire les perturbations électromagnétiques de ce même moteur.

Le moteur électrique comporte des embases de connexion électrique configurées pour assurer l'alimentation électrique du moteur électrique, les embases de connexion électrique s'étendant selon une direction perpendiculaire à la direction de l'arbre de rotation du moteur électrique.

La paroi latérale disposée entre le moteur électrique et l'unité électronique de contrôle comporte une ouverture configurée pour permettre le passage des embases de connexion du moteur électrique.

Selon un mode de réalisation, l'unité électronique de contrôle comporte des broches de connexion, chaque broche de connexion étant configurée pour être en contact électrique avec une embase de connexion du moteur électrique.

Chaque broche de connexion est insérée dans une embase de connexion du moteur électrique.

Chaque broche de connexion est rigidement liée à la carte de circuit imprimé.

Chaque broche de connexion est brasée à la carte de circuit imprimé. Alternativement, chaque broche de connexion peut être insérée en force dans la carte de circuit imprimée.

Selon un mode de réalisation alternatif, l'unité électronique de contrôle est reliée électriquement au moteur électrique par un câble souple.

Le moteur électrique peut être du type sans balai. Le moteur électrique peut être du type avec balai.

Le moteur électrique est du type à courant continu. Un moteur électrique selon toute autre technologie peut aussi être employé.

Il est également proposé un dispositif de réglage de position pour siège de véhicule, comportant :
- deux glissières s'étendant selon un axe longitudinal, chaque glissière comportant un profilé fixe et un profilé mobile, chaque glissière comportant un mécanisme de réglage de la position du profilé mobile par rapport au profilé fixe le long de l'axe longitudinal, le mécanisme de réglage étant configuré pour coopérer avec un moteur électrique,
- une traverse solidaire des profilés mobiles respectifs des deux glissières,
- un moteur électrique configuré pour entrainer chacun des mécanismes de réglage par l'intermédiaire d'une liaison de transmission, le moteur électrique étant solidaire de la traverse,
   le moteur électrique comportant des embases de connexion électrique configurées pour assurer l'alimentation électrique du moteur électrique,
- une unité électronique de contrôle configurée pour commander le moteur électrique, dans lequel l'unité électronique de contrôle comporte des broches de connexion, chaque broche de connexion étant insérée dans une embase de connexion du moteur électrique.

Autrement dit, l'unité électronique de contrôle est connectée directement au moteur électrique, sans moyen de connexion intermédiaire tel un faisceau électrique. Le dispositif de réglage de position peut comprendre, dans des modes de réalisation préférés, une ou plusieurs des caractéristiques décrites ci-avant, seules ou en combinaison.

L'invention concerne aussi un siège de véhicule, comportant un dispositif de réglage tel que décrit précédemment, dans lequel chaque glissière est solidaire d'une assise du siège.

### Brève description des dessins

D'autres caractéristiques, détails et avantages apparaîtront à la lecture de la description détaillée ci-après, et à l'analyse des dessins annexés, sur lesquels :
La figure 1 est une vue de côté d'un siège de véhicule comprenant un dispositif de réglage de position,
La figure 2 est une vue de face d'un siège de véhicule comprenant un dispositif de réglage de position,
La figure 3 est une vue partielle, en perspective, d'un dispositif de réglage de position selon un mode de réalisation,
La figure 4 est une vue éclatée, partielle, du dispositif de réglage de position de la figure 3,
La figure 5 est une vue éclatée, partielle, du dispositif de réglage de position de la figure 3, selon un autre angle de vue,
La figure 6 est une autre vue éclatée, partielle, du dispositif de réglage de position de la figure 5,
La figure 7 est une vue éclatée, partielle, d'un dispositif de réglage de position selon un autre mode de réalisation,
La figure 8 est une vue de dessous d'un siège de véhicule comprenant un dispositif de réglage de position selon un mode de réalisation,
La figure 9 est une vue en coupe, d'un détail d'un dispositif de réglage de position selon un autre mode de réalisation.

### Description des modes de réalisation

Afin de faciliter la lecture des figures, les différents éléments ne sont pas nécessairement représentés à l'échelle. Sur ces figures, les éléments identiques portent les mêmes références. Certains éléments ou paramètres peuvent être indexés, c'est-à-dire désignés par exemple par premier élément ou deuxième élément, ou encore premier paramètre et second paramètre, etc. Cette indexation a pour but de différencier des éléments ou paramètres similaires, mais non identiques. Cette indexation n'implique pas une priorité d'un élément, ou paramètre par rapport à un autre et on peut interchanger les dénominations.

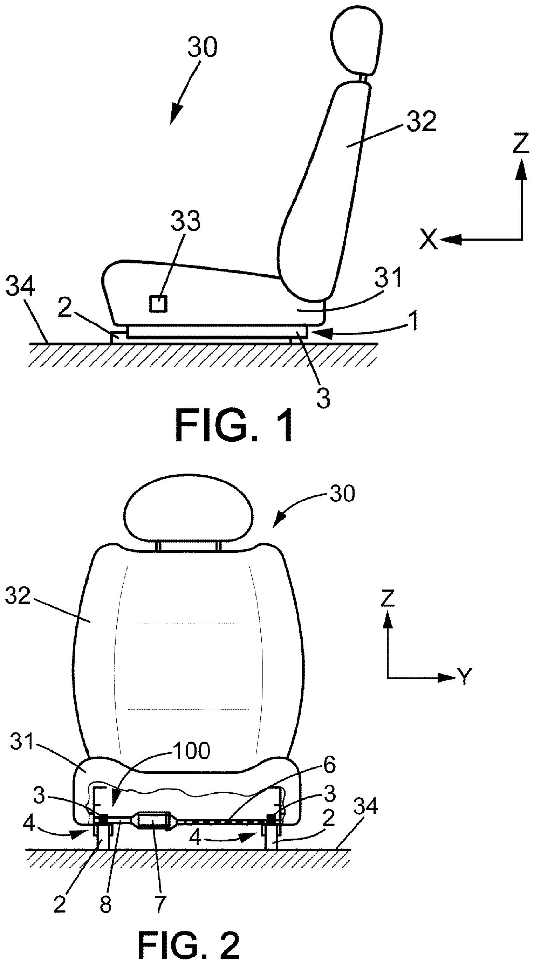

On a représenté sur la figure 1 un siège 30 de véhicule, notamment un siège de véhicule automobile. Le siège comprend une assise 31 et un dossier 32. Le siège 30 est fixé au plancher 34 du véhicule. La position du siège 30 sur le plancher 34 peut être réglée, afin de s'adapter à la taille et aux préférences de l'occupant. Pour cela, le siège 30 comporte un dispositif de réglage de position 100, commandé électriquement. Le dispositif de réglage de position 100 comporte deux glissières 1 pouvant coulisser le long de l'axe longitudinal X. Un bouton de commande 33 permet à l'occupant de commander le dispositif de réglage de position 100 et donc d'ajuster la position du siège 30. Pour cela, le siège 30 de véhicule comporte un dispositif de réglage 100 selon l'invention, dans lequel chaque glissière 1 est solidaire de l'assise 31 du siège 30.

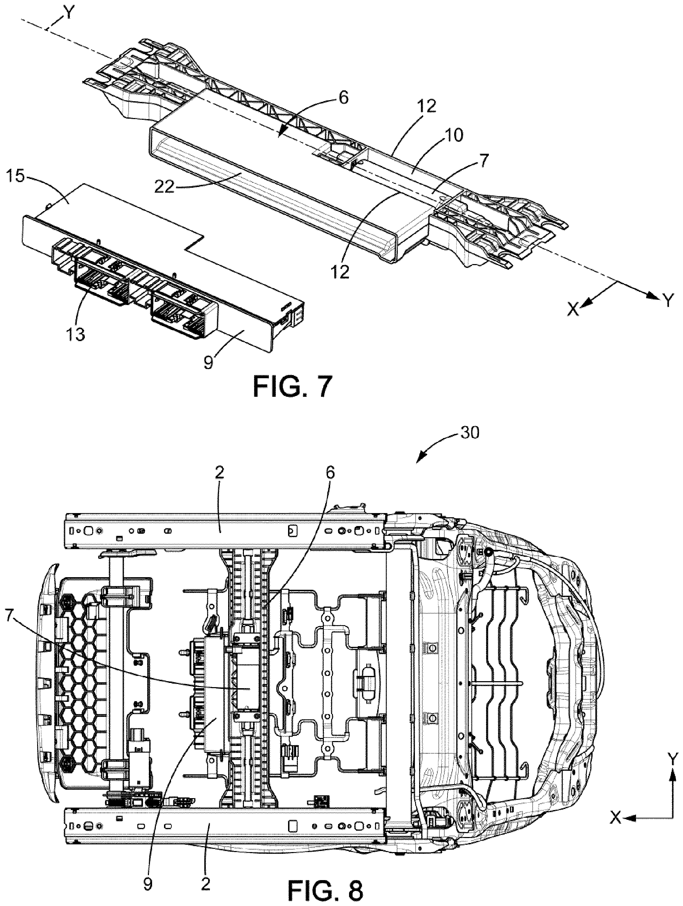

La direction dite longitudinale, repérée par le signe X sur la figure 1 et sur la figure 8, correspond à la direction selon laquelle le siège 100 se déplace par rapport au plancher 34. Autrement dit, la direction X correspond ici à l'axe avant/arrière du véhicule. La direction transversale, repérée par le signe Y sur la figure 2 et sur la figure 8, est perpendiculaire à la direction longitudinale X et correspond à l'axe gauche/droite du véhicule. L'axe Z correspond lui à la direction verticale, comme schématisé sur les figures 1 et 2.

Le dispositif de réglage de position 100 pour siège de véhicule, comporte :
- deux glissières 1 s'étendant selon un axe longitudinal X, chaque glissière comportant un profilé fixe 2 et un profilé mobile 3, chaque glissière 1 comportant un mécanisme de réglage 4 de la position du profilé mobile 3 par rapport au profilé fixe 2 le long de l'axe longitudinal X, le mécanisme de réglage 4 étant configuré pour coopérer avec un moteur électrique 7. Le mécanisme de réglage 4 comprend un système vis/écrou, et le moteur électrique 7 est configuré pour entrainer en rotation un élément parmi la vis et l'écrou.

Chaque profilé fixe 2 est configuré pour être solidarisé à un plancher 34 du véhicule. Chaque profilé fixe 2 est ici fixé sur le plancher 34 par un ensemble de vis et d'écrous correspondant du plancher 34. Chaque profilé mobile 3 est configuré pour être solidarisé à une assise 31 d'un siège 30 d'un véhicule. Dans l'exemple illustré ici, l'écrou du système vis/écrou du mécanisme de réglage 4 est un écrou rotatif. L'écrou rotatif du mécanisme de réglage 4 n'a pas été représenté. Une vis, également non représentée, solidaire d'un profilé fixe 2 et s'étendant selon la même direction X que le profilé fixe 2, coopère avec un écrou rotatif de façon à transformer le mouvement de rotation de l'écrou en un mouvement de translation le long de la vis. Pour cela, la vis est bloquée en rotation et bloquée en translation. L'écrou est bloqué en translation par rapport au profilé mobile, et libre en rotation par rapport au profilé mobile. Chaque glissière 1 comporte un mécanisme de réglage 4, mettant en oeuvre une vis ainsi qu'un écrou rotatif. Une rotation de l'écrou permet donc de déplacer l'écrou le long de la vis, et par conséquent de déplacer le profilé mobile 3 par rapport au profilé fixe 2 selon l'axe longitudinal X. L'ensemble du siège 30 peut ainsi être déplacé le long de la vis, afin d'avancer ou de reculer le siège.

Selon une variante non représentée, l'écrou est fixe et la vis est libre en rotation. Le moteur électrique 7 entraine en rotation la vis. Comme précédemment, un mouvement de translation des profilés mobiles par rapport aux profilés fixes 2 est obtenu.

La traverse 6 s'étend principalement selon une direction Y transversale. On entend par là que la traverse 6 présente une forme allongée et que sa plus grande dimension s'étend selon la direction Y transversale. La traverse 6 relie un profilé mobile 3 à l'autre profilé mobile 3. La traverse 6 et les glissières 1 sont sensiblement perpendiculaires.

Comme représenté sur les figures 2 et 8, le dispositif de réglage de position 100 comporte également :
- une traverse 6 solidaire des profilés mobiles respectifs des deux glissières 1,
- un moteur électrique 7 configuré pour entrainer chacun des mécanismes de réglage 4 par l'intermédiaire d'une liaison de transmission 8, le moteur électrique 7 étant solidaire de la traverse 6,
- une unité électronique de contrôle 9 configurée pour commander le moteur électrique 7. L'unité électronique de contrôle 9 est solidaire de la traverse 6.

Le moteur électrique 7 et l'unité électronique de contrôle 9 du moteur électrique sont solidaires de la même traverse 6. La traverse 6 porte le moteur électrique 7 et aussi l'unité électronique de contrôle 9. Il est ainsi possible de rapprocher l'assise 31 du siège 30 du plancher 34 du véhicule. Le volume libéré peut aussi servir à disposer un espace de rangement supplémentaire.

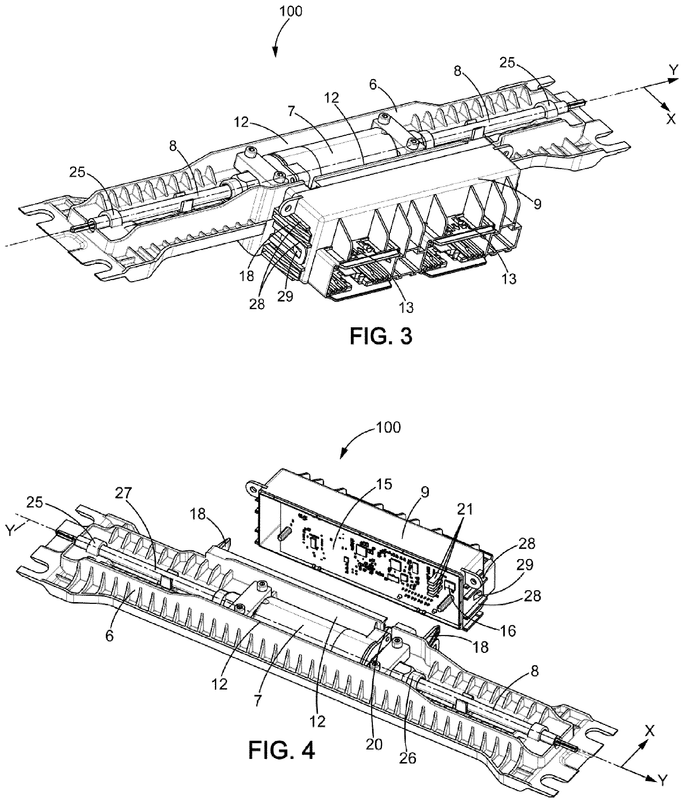

Comme représenté sur les figures 3 à 5, la traverse 6 comprend un logement de réception 10 du moteur électrique, le logement de réception 10 comportant une paroi de fond 11 et deux parois latérales 12, et une paroi latérale 12 est disposée entre le moteur électrique 7 et l'unité électronique de contrôle 9.

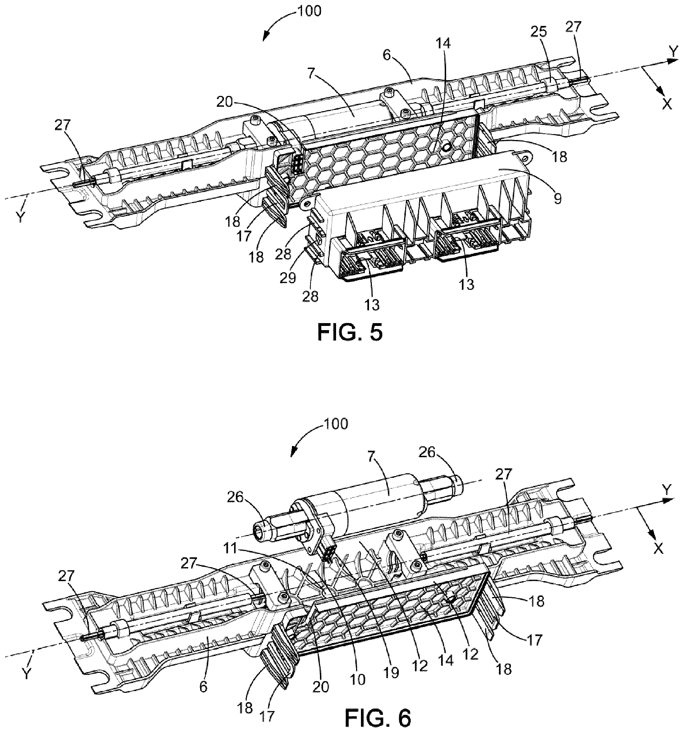

Comme détaillé sur la figure 4 ainsi que sur la figure 5, l'unité électronique de contrôle 9 est disposée contre une surface extérieure 14 d'une paroi latérale 12 du logement de réception 10 du moteur électrique 7. La paroi latérale 12 s'étend ici dans un plan perpendiculaire à la fois à la direction longitudinale X et à direction transversale Y. Autrement dit, la paroi latérale 12 s'étend ici dans un plan vertical.

Dans le mode de réalisation illustré sur les figures 3 à 5, l'unité électronique de contrôle 9 comporte une carte de circuit imprimé 15 configurée pour alimenter électriquement le moteur électrique 7, et la carte de circuit imprimée 15 s'étend dans un plan perpendiculaire à la direction longitudinale X. L'encombrement selon la direction longitudinale X du dispositif de réglage de position 100 est ainsi réduit.

Dans le mode de réalisation illustré sur la figure 7, l'unité électronique de contrôle 9 comporte une carte de circuit imprimé 15 configurée pour alimenter électriquement le moteur électrique 7, et la carte de circuit imprimée 15 s'étend dans un plan parallèle à la direction longitudinale X et à la direction transversale Y. L'encombrement du dispositif de réglage de position 100 selon la direction verticale Z est ainsi réduit. L'unité électronique de contrôle 9 peut également comporter plusieurs cartes de circuit imprimé distinctes. L'unité électronique de contrôle 9 peut piloter également d'autres organes électriques, tel d'autres moteurs électriques servant à ajuster d'autres réglages du siège 30.

L'unité électronique de contrôle 9 possède un ensemble de connecteurs 13 permettant de connecter les différentes entrées / sorties, tel que l'alimentation électrique et les commandes des différents réglages souhaités par l'utilisateur.

Un arbre de rotation 24 du moteur électrique s'étend parallèlement à une direction d'extension Y de la traverse 6. Comme détaillé plus particulièrement sur la figure 5, la traverse 6 comporte un ensemble de paliers 25 de rotation de la liaison de transmission 8. Le moteur électrique 7 comporte deux sorties 26 configurées pour transmettre un mouvement de rotation, et la liaison de transmission 8 comporte deux arbres de transmission 27, chaque sortie 26 étant configurée pour entrainer en rotation un arbre de transmission 27. Les deux arbres de transmission 27 s'étendent selon une même direction, qui est la direction transversale Y. L'arbre de rotation du moteur électrique 7 et les deux arbres de transmission 27 sont coaxiaux. Chaque arbre de transmission 27 est solidaire en rotation de l'écrou rotatif du mécanisme de réglage 4. Ces arbres de transmissions 27 peuvent être flexibles ou rigides.

Selon un mode de réalisation illustré sur la figure 4, le moteur électrique 7 comporte un rotor et une cible magnétique solidaire du rotor, et la carte de circuit imprimé 15 de l'unité électronique de contrôle 9 comporte un capteur de position 16 configuré pour déterminer la position angulaire du rotor.

Sur l'exemple illustré, le capteur de position 16 est un capteur à effet Hall. D'autres types de capteur de position peuvent également être utilisés. La cible magnétique solidaire du rotor est ici un aimant permanent. D'autres types de cible magnétique sont également possibles.

L'unité électronique de contrôle 9 peut ainsi déterminer la position angulaire sur un tour moteur et le nombre de tours réalisés par le rotor. De là, le nombre de tours réalisés par l'écrou du mécanisme de réglage 4 peut être déterminé, ce qui permet de déterminer la position du mécanisme de réglage 4 le long de la vis d'ajustement de position. Autrement dit, l'unité électronique de contrôle 9 est configurée pour déterminer une position linéaire d'un profilé mobile 2 par rapport à un profilé fixe 3 le long de l'axe longitudinal X. La mémorisation du nombre de tours et de la position du siège est réalisé dans une mémoire non volatile, pour éviter de perdre la position lors d'une coupure d'alimentation. Il est ainsi possible de mémoriser la position préférée d'un utilisateur, et de positionner le siège selon la préférence de cet utilisateur lorsque celui-ci est identifié lorsqu'il rentre dans le véhicule.

Selon une variante non représentée, la liaison de transmission 8 comporte une cible magnétique, et la carte de circuit imprimé 15 de l'unité électronique de contrôle 9 comporte un capteur de position 16 configuré pour déterminer la position angulaire de la liaison de transmission 8. Comme précédemment, la détermination du nombre de tours réalisés permet d'obtenir la position du siège, qui peut aussi être mémorisée.

Comme représenté notamment sur les figures 4 et 6, l'unité électronique de contrôle 9 est fixée à la traverse 6 par des éléments de liaison 17 à emboitage élastique. Des clips de fixation peuvent ainsi assurer la fixation de l'unité électronique de contrôle sur la traverse 6. Le verrouillage en position est assuré par la coopération des éléments de liaison 17 avec un ergot 29 de l'unité électronique de contrôle 9. Les éléments de liaison à emboitage élastique peuvent former un ensemble monobloc avec la traverse 6. Les éléments de liaison à emboitage élastique peuvent ainsi être moulés avec la traverse 6. Les éléments de liaison 17 à emboitage élastique peuvent aussi être des pièces rapportées et fixées sur la traverse 6.

La traverse 6 comporte également des éléments de guidage 18 configurés pour guider l'unité électronique de contrôle 9 lors de la connexion de l'unité électronique de contrôle 9 au moteur électrique 7. L'unité électronique de contrôle comporte des nervures 28 entre lesquels les éléments de guidage 18 de la traverse 6 s'insèrent lorsque l'unité de contrôle 9 est approchée de la traverse 6 afin de réaliser la connexion électrique avec le moteur électrique 7. Les éléments de guidage 18 et les nervures 28 s'étendent selon la même direction, qui est la direction longitudinale X, lorsque l'unité électronique de contrôle 9 est dans sa position nominale de fonctionnement, c'est-à-dire assemblée sur la traverse 6. La figure 3 représente l'unité électronique de contrôle 9 une fois assemblée sur la traverse 6.

Ainsi, dans le cas où l'unité électronique de contrôle 9 doit être démontée puis remontée, par exemple pour une opération de maintenance du véhicule, l'étape de remontage de l'unité électronique de contrôle 9 est facilitée. En effet, la zone située sous le siège est d'un accès difficile, car celui-ci est exigu et offre peu de visibilité. Il est ainsi utile de disposer d'un moyen de guidage de l'unité électronique de contrôle pour son montage. Il est également utile de disposer d'un moyen de fixation ne nécessitant pas d'éléments de fixation rapportés et difficiles à mettre en place, tel que par exemples des vis de fixation.

Les éléments de guidage 18 peuvent former un ensemble monobloc avec la traverse 6. Par exemple, les éléments de guidage 18 peuvent être moulés en même temps que la traverse 6. Sur l'exemple illustré ici, notamment figure 6, les éléments de guidage 18 sont placés de part de d'autre des éléments de liaison 17 à emboitage élastique selon un plan parallèle à la direction longitudinale X et à la direction transversale Y.

Dans le mode de réalisation de la figure 7, la traverse 6 forme un logement de réception 22 de la carte de circuit imprimé 15 de l'unité électronique de contrôle 9. Autrement dit, un logement formé sur la traverse 6 joue le rôle de boitier pour la carte électronique de l'unité de contrôle 9. Selon un mode de réalisation, le logement de réception 22 de la carte de circuit imprimé 15 forme un ensemble monobloc avec la traverse 6. L'unité électronique de contrôle 9 ne comporte pas de boitier séparé, contrairement aux solutions selon l'art antérieur. Le nombre de pièces est ainsi minimisé. L'ensemble de connecteurs 13 de la carte de circuit imprimé 15 est affleurant avec le bord du logement de réception 22.

La traverse 6 intègre ainsi les principaux éléments du dispositif de réglage de position 100 : le moteur électrique 7, la liaison de transmission 8, ainsi que l'unité électronique de contrôle 9. L'encombrement et le poids sont diminués par rapport aux solutions selon l'art antérieur. De plus, l'intégration de l'unité électronique de commande 9 à côté du moteur électrique 7 de glissière permet de réduire les perturbations électromagnétiques du moteur 7.

Comme détaillé notamment sur la figure 6, le moteur électrique 7 comporte des embases 19 de connexion électrique configurées pour assurer l'alimentation électrique du moteur électrique 7, les embases 19 de connexion électrique s'étendant selon une direction perpendiculaire à la direction de l'arbre de rotation du moteur électrique 7. Ainsi, les embases de connexion s'étendent selon la direction longitudinale X.

La paroi latérale 12 disposée entre le moteur électrique 7 et l'unité électronique de contrôle 9 comporte une ouverture 20 configurée pour permettre le passage des embases 19 de connexion du moteur électrique 7.

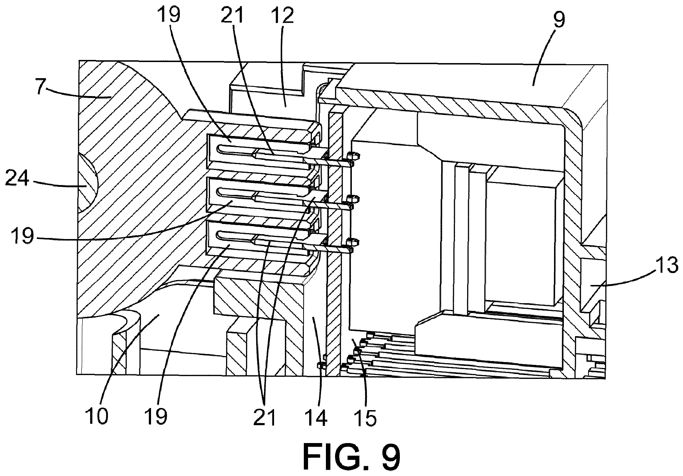

La figure 9 détaille la connexion électrique entre l'unité électronique de contrôle 9 et le moteur électrique 7. L'unité électronique de contrôle 9 comporte des broches 21 de connexion, chaque broche 21 de connexion est configurée pour être en contact électrique avec une embase 19 de connexion du moteur électrique 7.

Chaque broche 21 de connexion est insérée dans une embase 19 de connexion du moteur électrique 7. Autrement dit, la connexion électrique entre l'unité électronique de contrôle 9 et le moteur électrique 7 se fait de manière directe, c'est-à-dire sans faisceau électrique intermédiaire.

Chaque broche 21 de connexion est rigidement liée à la carte de circuit imprimé 15.

Chaque broche 21 de connexion est ici brasée à la carte de circuit imprimé 15. Chaque broche 21 de connexion traverse la carte de circuit imprimé 15. Alternativement, chaque broche de connexion 21 peut être insérée en force dans la carte de circuit imprimée 15. Le procédé connu par l'Anglais « press-fit » peut être employé.

Selon un mode de réalisation non représenté, l'unité électronique de contrôle 9 est reliée électriquement au moteur électrique 7 par un câble souple servant de faisceau intermédiaire de connexion électrique. Cette solution peut être envisagée lorsqu'il préférable de positionner l'unité électronique de contrôle 9 avec un décalage par rapport au moteur électrique 9.

Le moteur électrique 7 est sur l'exemple représenté du type sans balai. Le moteur électrique 7 peut aussi être du type à courant continu et avec balais.

## Revendications

1. Dispositif de réglage de position (100) pour siège de véhicule, comportant :
a. deux glissières (1) s'étendant selon un axe longitudinal (X), chaque glissière comportant un profilé fixe (2) et un profilé mobile (3), chaque glissière (1) comportant un mécanisme de réglage (4) de la position du profilé mobile (3) par rapport au profilé fixe (2) le long de l'axe longitudinal (X), le mécanisme de réglage (4) étant configuré pour coopérer avec un moteur électrique (7),
b. une traverse (6) solidaire des profilés mobiles respectifs des deux glissières (1),
c. un moteur électrique (7) configuré pour entrainer chacun des mécanismes de réglage (4) par l'intermédiaire d'une liaison de transmission (8), le moteur électrique (7) étant solidaire de la traverse (6),
d. une unité électronique de contrôle (9) configurée pour commander le moteur électrique (7), dans lequel l'unité électronique de contrôle (9) est solidaire de la traverse (6),
**caractérisé en ce que**
la traverse (6) comprend un logement de réception (10) du moteur électrique, le logement de réception (10) comportant une paroi de fond (11) et deux parois latérales (12), dans lequel une paroi latérale (12) est disposée entre le moteur électrique (7) et l'unité électronique de contrôle (9),
**en ce que**
l'unité électronique de contrôle (9) est disposée contre une surface extérieure (14) d'une paroi latérale (12) du logement de réception (10) du moteur électrique (7), et **en ce que**
la traverse (6) comporte des éléments de guidage (18) configurés pour guider l'unité électronique de contrôle (9) lors de la connexion de l'unité électronique de contrôle (9) au moteur électrique (7).

2. Dispositif de réglage (100) selon la revendication 1, dans lequel le mécanisme de réglage (4) comprend un système vis/écrou, et dans lequel le moteur électrique (7) est configuré pour entrainer en rotation un élément parmi la vis et l'écrou.

3. Dispositif de réglage (100) selon la revendication précédente, dans lequel l'unité électronique de contrôle (9) comporte une carte de circuit imprimé (15) configurée pour alimenter électriquement le moteur électrique (7), et dans lequel la carte de circuit imprimée (15) s'étend dans un plan perpendiculaire à la direction longitudinale (X).

4. Dispositif de réglage (100) selon la revendication 1 ou 2, dans lequel l'unité électronique de contrôle (9) comporte une carte de circuit imprimé (15) configurée pour alimenter électriquement le moteur électrique (7), et dans lequel la carte de circuit imprimée (15) s'étend dans un plan parallèle à la direction longitudinale (X) et à la direction transversale (Y).

5. Dispositif de réglage (100) selon l'une des revendications précédentes, dans lequel le moteur électrique (7) comporte un rotor et une cible magnétique solidaire du rotor, et dans lequel une carte de circuit imprimé (15) de l'unité électronique de contrôle (9) comporte un capteur de position (16) configuré pour déterminer la position angulaire du rotor.

6. Dispositif de réglage (100) selon l'une des revendications 1 à 4, dans lequel la liaison de transmission (8) comporte une cible magnétique, et dans lequel une carte de circuit imprimé (15) de l'unité électronique de contrôle (9) comporte un capteur de position (16) configuré pour déterminer la position angulaire de la liaison de transmission (8).

7. Dispositif de réglage (100) selon l'une des revendications précédentes, dans lequel l'unité électronique de contrôle (9) est fixée à la traverse (6) par des éléments de liaison (17) à emboitage élastique.

8. Dispositif de réglage (100) selon l'une des revendications précédentes, dans lequel la traverse (6) forme un logement de réception (22) d'une carte de circuit imprimé (15) de l'unité électronique de contrôle (9).

9. Dispositif de réglage (100) selon l'une des revendications précédentes en combinaison avec la revendication 3 ou 4, dans lequel le moteur électrique (7) comporte des embases (19) de connexion électrique configurées pour assurer l'alimentation électrique du moteur électrique (7), les embases (19) de connexion électrique s'étendant selon une direction perpendiculaire à la direction de l'arbre de rotation du moteur électrique (7),
dans lequel la paroi latérale (12) disposée entre le moteur électrique et l'unité électronique de contrôle (9) comporte une ouverture (20) configurée pour permettre le passage des embases (19) de connexion du moteur électrique,
dans lequel l'unité électronique de contrôle (9) comporte des broches (21) de connexion, chaque broche (21) de connexion étant configurée pour être en contact électrique avec une embase (19) de connexion du moteur électrique (7),
et dans lequel chaque broche (21) de connexion est insérée dans une embase (19) de connexion du moteur électrique (7) et dans lequel chaque broche (21) de connexion est rigidement liée à la carte de circuit imprimé (15).

10. Siège (30) de véhicule, comportant un dispositif de réglage (100) selon l'une des revendications précédentes, dans lequel chaque glissière (1) est solidaire d'une assise (31) du siège (30).

## Patentansprüche

1. Positionseinstellvorrichtung (100) für einen Fahrzeugsitz, umfassend:
a. zwei Gleitschienen (1), die sich entlang einer Längsachse (X) erstrecken, wobei jede Gleitschiene ein festes Profil (2) und ein bewegliches Profil (3) umfasst, wobei jede Gleitschiene (1) einen Mechanismus (4) zum Einstellen der Position des beweglichen Profils (3) relativ zu dem festen Profil (2) entlang der Längsachse (X) umfasst, wobei der Einstellmechanismus (4) konfiguriert ist, um mit einem Elektromotor (7) zusammenzuwirken,
b. einen Querträger (6), der mit den jeweiligen beweglichen Profilen der zwei Gleitschienen (1) einstückig ist,
c. einen Elektromotor (7), der konfiguriert ist, um jeden von den Einstellmechanismen (4) über ein Übertragungsverbindungsstück (8) anzutreiben, wobei der Elektromotor (7) einstückig mit dem Querträger (6) ist,
d. eine elektronische Steuereinheit (9), die konfiguriert ist, um den Elektromotor (7) zu steuern, wobei die elektronische Steuereinheit (9) mit dem Querträger (6) einstückig ist,
**dadurch gekennzeichnet, dass**
der Querträger (6) ein Gehäuse (10) zum Aufnehmen des Elektromotors umfasst, wobei das Aufnahmegehäuse (10) eine Bodenwand (11) und zwei Seitenwände (12) umfasst, wobei eine Seitenwand (12) zwischen dem Elektromotor (7) und der elektronischen Steuereinheit (9) angeordnet ist,
**dass**
die elektronische Steuereinheit (9) gegen eine Außenoberfläche (14) einer Seitenwand (12) des Gehäuses (10) zum Aufnnehmen des Elektromotors (7) angeordnet ist,
und **dass**
der Querträger (6) Führungselemente (18) umfasst, die konfiguriert sind, um die elektronische Steuereinheit (9) während der Verbindung der elektronischen Steuereinheit (9) mit dem Elektromotor (7) zu führen.

2. Einstellvorrichtung (100) nach Anspruch 1, wobei der Einstellmechanismus (4) ein Schrauben/Mutter-System umfasst und wobei der Elektromotor (7) konfiguriert ist, um eine von der Schraube und der Mutter zu drehen.

3. Einstellvorrichtung (100) nach dem vorstehenden Anspruch, wobei die elektronische Steuereinheit (9) eine Leiterplatte (15) umfasst, die konfiguriert ist, um den Elektromotor (7) elektrisch zu versorgen, und wobei sich die Leiterplatte (15) in einer Ebene senkrecht zu der Längsrichtung (X) erstreckt.

4. Einstellvorrichtung (100) nach Anspruch 1 oder 2, wobei die elektronische Steuereinheit (9) eine Leiterplatte (15) umfasst, die konfiguriert ist, um den Elektromotor (7) elektrisch zu versorgen, und wobei sich die Leiterplatte (15) in einer Ebene parallel zu der Längsrichtung (X) und der Querrichtung (Y) erstreckt.

5. Einstellvorrichtung (100) nach einem der vorstehenden Ansprüche, wobei der Elektromotor (7) einen Rotor und ein mit dem Rotor einstückiges magnetisches Ziel umfasst, und wobei eine Leiterplatte (15) der elektronischen Steuereinheit (9) einen Positionssensor (16) umfasst, der konfiguriert ist, um die Winkelposition des Rotors zu bestimmen.

6. Einstellvorrichtung (100) nach einem der Ansprüche 1 bis 4, wobei das Übertragungsverbindungsstück (8) ein magnetisches Ziel umfasst, und wobei eine Leiterplatte (15) der elektronischen Steuereinheit (9) einen Positionssensor (16) umfasst, der konfiguriert ist, um die Winkelposition des Übertragungsverbindungsstücks (8) zu bestimmen.

7. Einstellvorrichtung (100) nach einem der vorstehenden Ansprüche, wobei die elektronische Steuereinheit (9) durch elastische ineinandergreifende Verbindungselemente (17) an dem Querträger (6) befestigt ist.

8. Einstellvorrichtung (100) nach einem der vorstehenden Ansprüche, wobei der Querträger (6) ein Gehäuse (22) zum Aufnehmen einer Leiterplatte (15) der elektronischen Steuereinheit (9) bildet.

9. Einstellvorrichtung (100) nach einem der vorstehenden Ansprüche in Kombination mit Anspruch 3 oder 4, wobei der Elektromotor (7) Elektroanschlussbuchsen (19) umfasst, die konfiguriert sind, um die elektrische Versorgung des Elektromotors (7) zu gewährleisten, wobei sich die Elektroanschlussbuchsen (19) in einer Richtung senkrecht zu der Richtung der Drehwelle des Elektromotors (7) erstrecken,
wobei die zwischen dem Elektromotor und der elektronischen Steuereinheit (9) angeordnete Seitenwand (12) eine Öffnung (20) umfasst, die konfiguriert ist, um den Durchgang der Anschlussbuchsen (19) des Elektromotors zu ermöglichen,
wobei die elektronische Steuereinheit (9) Anschlussstifte (21) umfasst, wobei jeder Anschlussstift (21) konfiguriert ist, um in elektrischem Kontakt mit einer Anschlussbuchse (19) des Elektromotors (7) zu stehen,
und wobei jeder Anschlussstift (21) in eine Anschlussbuchse (19) des Elektromotors (7) eingesetzt ist und wobei jeder Anschlussstift (21) starr mit der Leiterplatte (15) verbunden ist.

10. Fahrzeugsitz (30), umfassend eine Einstellvorrichtung (100) nach einem der vorstehenden Ansprüche, wobei jede Gleitschiene (1) mit einer Sitzbasis (31) des Sitzes (30) einstückig ist.

## Claims

1. A position adjustment device (100) for a vehicle seat, comprising:
a. two slideways (1) extending along a longitudinal axis (X), each slideway comprising a fixed profile (2) and a movable profile (3), each slideway (1) comprising a mechanism (4) for adjusting the position of the movable profile (3) relative to the fixed profile (2) along the longitudinal axis (X), the adjustment mechanism (4) being configured to cooperate with an electric motor (7),
b. a crossmember (6) fixed to the respective movable profiles of the two slideways (1),
c. an electric motor (7) configured to drive each of the adjustment mechanisms (4) via a transmission link (8), the electric motor (7) being fixed to the crossmember (6),
d. an electronic control unit (9) configured to control the electric motor (7), wherein the electronic control unit (9) is fixed to the crossmember (6),
**characterized in that**
the crossmember (6) comprises a housing (10) for receiving the electric motor, the receiving housing (10) comprising a bottom wall (11) and two side walls (12), wherein a side wall (12) is arranged between the electric motor (7) and the electronic control unit (9),
**in that**
the electronic control unit (9) is arranged against an outer surface (14) of a side wall (12) of the housing (10) for receiving the electric motor (7),
and **in that**
the crossmember (6) comprises guide elements (18) configured to guide the electronic control unit (9) during the connection of the electronic control unit (9) to the electric motor (7).

2. The adjustment device (100) according to claim 1, wherein the adjustment mechanism (4) comprises a screw/nut system, and wherein the electric motor (7) is configured to rotate one of the screw and the nut.

3. The adjustment device (100) according to the preceding claim, wherein the electronic control unit (9) comprises a printed circuit board (15) configured to electrically supply the electric motor (7), and wherein the printed circuit board (15) extends in a plane perpendicular to the longitudinal direction (X).

4. The adjustment device (100) according to claim 1 or 2, wherein the electronic control unit (9) comprises a printed circuit board (15) configured to electrically supply the electric motor (7), and wherein the printed circuit board (15) extends in a plane parallel to the longitudinal direction (X) and the transverse direction (Y).

5. The adjustment device (100) according to one of the preceding claims, wherein the electric motor (7) comprises a rotor and a magnetic target fixed to the rotor, and wherein a printed circuit board (15) of the electronic control unit (9) comprises a position sensor (16) configured to determine the angular position of the rotor.

6. The adjustment device (100) according to one of claims 1 to 4, wherein the transmission link (8) comprises a magnetic target, and wherein a printed circuit board (15) of the electronic control unit (9) comprises a position sensor (16) configured to determine the angular position of the transmission link (8).

7. The adjustment device (100) according to one of the preceding claims, wherein the electronic control unit (9) is attached to the crossmember (6) by elastic interlocking link members (17).

8. The adjustment device (100) according to one of the preceding claims, wherein the crossmember (6) forms a housing (22) for receiving a printed circuit board (15) of the electronic control unit (9).

9. The adjustment device (100) according to one of the preceding claims, in combination with claim 3 or 4, wherein the electric motor (7) comprises electrical connection receptacles (19) configured to ensure the electrical supply of the electric motor (7), the electrical connection receptacles (19) extending in a direction perpendicular to the direction of the rotation shaft of the electric motor (7),
wherein the side wall (12) arranged between the electric motor and the electronic control unit (9) comprises an opening (20) configured to allow the passage of the connection receptacles (19) of the electric motor,
wherein the electronic control unit (9) comprises connection pins (21), each connection pin (21) being configured to be in electrical contact with a connection receptacle (19) of the electric motor (7),
and wherein each connection pin (21) is inserted into a connection receptacle (19) of the electric motor (7) and wherein each connection pin (21) is rigidly connected to the printed circuit board (15).

10. A vehicle seat (30), comprising an adjustment device (100) according to one of the preceding claims, wherein each slideway (1) is fixed to a seat base (31) of the seat (30).
